(19) **Europäisches Patentamt**
**European Patent Office**
**Office européen des brevets**

(11) **EP 1 646 806 B1**

(12) **EUROPEAN PATENT SPECIFICATION**

(45) Date of publication and mention of the grant of the patent:
**23.04.2008 Bulletin 2008/17**

(21) Application number: **04748709.5**

(22) Date of filing: **06.07.2004**

(51) Int Cl.:
**F16G 5/16** (2006.01)

(86) International application number:
**PCT/NL2004/000483**

(87) International publication number:
**WO 2005/003590 (13.01.2005 Gazette 2005/02)**

(54) **DRIVE BELT HAVING TRANSVERSE ELEMENTS AND A BAND SET**

TREIBRIEMEN MIT QUERELEMENTEN UND EINEM BANDSATZ

COURROIE D'ENTRAINEMENT POURVUE D'ELEMENTS TRANSVERSAUX ET D'UN ENSEMBLE DE BANDES

(84) Designated Contracting States:
**AT BE BG CH CY CZ DE DK EE ES FI FR GB GR HU IE IT LI LU MC NL PL PT RO SE SI SK TR**

(30) Priority: **08.07.2003 NL 1023858**

(43) Date of publication of application:
**19.04.2006 Bulletin 2006/16**

(73) Proprietor: **ROBERT BOSCH GMBH**
**70442 Stuttgart (DE)**

(72) Inventors:
• **LEMMENS, Marlène, Elisabeth, Inge**
**NL-5683 BV Best (NL)**
• **TRAN, Minh, Duc**
**NL-5348 GC Oss (NL)**
• **VAN DROGEN, Mark**
**NL-5021 EJ Tilburg (NL)**

• **BRANDSMA, Arjen**
**NL-5045 WN Tilburg (NL)**

(74) Representative: **Plevier, Gabriel Anton Johan Maria**
**Van Doorne's Transmissie B.V.,**
**Patents Department,**
**Postbus 500**
**5000 AM Tilburg (NL)**

(56) References cited:
**EP-A- 0 626 526**     **EP-A- 0 909 907**
**EP-A- 1 072 815**     **EP-A- 1 184 591**
**EP-A- 1 219 859**     **EP-A- 1 221 562**
**US-A- 4 579 549**

• **PATENT ABSTRACTS OF JAPAN vol. 015, no. 155 (M-1104), 18 April 1991 (1991-04-18) & JP 03 028546 A (NISSAN MOTOR CO LTD), 6 February 1991 (1991-02-06)**

**EP 1 646 806 B1**

**Description**

The present invention relates to a drive belt, as described in the preamble of Claim 1 below.

A drive belt of this type is generally known and is described, for example, in European patent publication EP-A-0 909 907. The drive belt, which is known per se, comprises a series of successively positioned transverse elements and, at least in this example, two sets of a number of relatively thin, continuous bands which are stacked in the radial direction, the transverse elements being positioned in the drive belt in such a manner that they can move freely at least in the circumferential direction of the band sets. A drive belt of this type is in widespread use as a transmission element in continuously variable transmissions, which are otherwise generally known, the drive belt being arranged around and between two pulleys.

It is known that in a transmission of this type the transverse elements, at the location of the two pulleys, i.e. where they are clamped between the sheaves of the pulleys, are subject to a radially outwardly directed radial force which is supported as a normal force on the radially inner band of the band set, so that a tensile force is generated therein. However, the radially inner band will become stretched on account of this tensile force. However, stretching of this nature is counteracted by the presence of the next band in the respective set of bands, i.e. the band which is next to the inner band. As a result, the said normal force will partially also be supported on the next band, and consequently a tensile force is also generated therein. This play of forces propagates through the entire height of the set, i.e. across all bands of the band set, with the tensile force in theory being distributed uniformly across the bands and the band set consequently overall being stretched to a defined extent. In this case, the normal forces acting on the respective bands decrease uniformly from the level of the radial force on the radially inwardly facing surface, i.e. the inner side, of the inner band, to zero on the radially outwardly facing surface, i.e. the outer side, of the radially outer band of the band set.

During operation, i.e. when the drive belt is rotating in the transmission, moreover, frictional forces are active between the bands of the band set as a result of a geometrically defined difference in peripheral velocity. The frictional force acting on the inner or outer side of the bands is in this case defined by the product of a coefficient of friction and the locally prevailing normal force. Since the normal force decreases over the height of the set, the inner side of a band is therefore subject to a greater frictional force than the outer side of the said band; this difference between the frictional forces acting on either side of the band in particular represents a mechanical load on the bands which is in addition to the abovementioned tensile force, namely a shear stress acting on the bands. Moreover, the loading mentioned is subject to a periodically recurring variation, i.e. amplitude, during a revolution of the drive belt in the transmission, since the said normal forces vary considerably over the circumference of the drive belt. Consequently, the bands are subject to fatigue stresses, which are ultimately the determining factor for the service life of the drive belt.

Therefore, it could be concluded that it is advantageous for the coefficients of friction between the various bands of the band set to be equal, so that the frictional forces are distributed uniformly and proportionally to the normal forces across the total set and so that, moreover, the said amplitude of the load, which determines the service life of the drive belt, is equal for all bands and therefore is also minimal.

Although a drive belt of this type apparently has an optimum distribution of the frictional forces, according to the present invention this distribution can nevertheless be improved. The invention is therefore based on the object of improving the service life of the drive belt, or at least of optimizing a distribution of the fatigue stresses over the bands of the band set, in particular with regard to a play in the radial direction between the bands. In this context, the present invention uses as the definition for this so-called radial play between a pair of adjacent bands in a band set the value of the difference in the circumferential length of the outer side of the radially enclosed, i.e. inner band of the pair and of the inner side of the radially enclosing, i.e. outer band of the pair divided by 2 times pi ($2\pi$).

For this purpose, the invention proposes the novel drive belt design of Claim 1 and is based on the fact that in practice there will always be some radial play between the bands of the band set, which radial play has a considerable influence on the said frictional forces and the distribution thereof. The invention combines this fact with a newly obtained insight into the frictional behaviour in the contact between two bands, from which a surprising but very useful result is obtained. The drive belt according to the invention has the advantage that it combines a design of the band set which is used in practice and is suitable for effective mass production with an advantageous distribution of the fatigue stresses across the bands of the band set.

As has already been noted, inter alia, in the US patent 4,579,549, in practice a radial play, albeit small, is generally employed between two adjacent bands of a band set. The radial play is in this case generally positive, in order to facilitate assembly of a band set from a number of bands. However, under certain circumstances, as is known, a negative radial play may be advantageous. In any event, the greater the permitted radial play, the easier it is to assemble more band sets from a given quantity of separately produced bands whose circumferential length and/or radial dimension or thickness has a certain spread.

However, the abovementioned permitted radial play has a relatively major influence on the normal force which is active between a pair of adjacent bands, certainly in the case of a relatively rigid material, such as the maraging steel which has been nitrided and hardened by means of a heat treatment from which the bands are generally produced. In the contact between a pair of adjacent bands with a positive or negative radial play between them, at least one of the two bands will have to stretch until the said play has disappeared before the other band will also start to absorb some of the overall tensile force. In the case of a positive radial play, the radially inner band of the pair will stretch slightly, so that the normal forces and therefore the frictional forces decrease at an accelerated rate across the height of the set compared to a theoretically ideal band set in which the radial play between the pairs of adjacent bands of the band set is equal to zero. In the case of a negative radial play, this situation is reversed.

Since the frictional force is determined by the product of the local normal force and the coefficient of friction, according to the invention, a non-proportional decrease in the normal forces of this type, at least with regard to the frictional force exerted on the bands, can be at least partially compensated for by altering the coefficient of friction in the opposite direction. Moreover, a change in the coefficient of friction of this nature has proven to be achievable in a surprising and relatively simple way, as explained in more detail below with reference to the figures.

Figure 1 shows a highly simplified, partially cut-away view of a continuously variable transmission provided with two pulleys and a drive belt.

Figure 2 shows part of the drive belt from Figure 1 provided with two band sets and transverse elements.

Figure 3 shows a simplified side view of a transverse element and a band set including a representation of the forces acting on and from a band set.

Figure 4 shows a diagram illustrating the normal forces normalized on the basis of the radial force and acting on the separate bands of a band set.

Figure 5 shows a diagram in which relevant coefficients of friction acting in the drive belt are defined in accordance with the present invention.

Figure 6 shows a graph based on measurement results in which a coefficient of friction between two adjacent bands of a band set is related to two parameters which characterize the friction between the bands.

Figure 7 shows a section of a band of a band set provided with a roughness profile with peaks and valley regions.

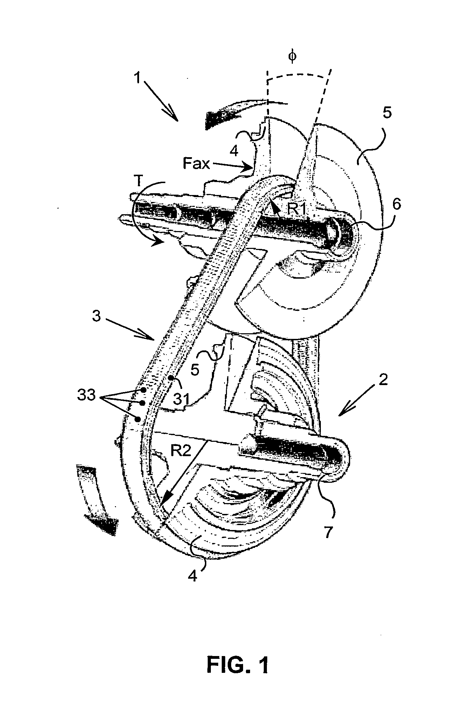

Figure 1 shows the main parts of a continuously variable transmission as used in the drive of, for example, passenger cars. The transmission is generally known per se and comprises two pulleys 1, 2, which each comprise two pulley sheaves 4, 5 and between which there is positioned a drive belt 3. The pulley sheaves 4, 5 are substantially conical in form, and at least one sheave 4 of a pulley 1, 2 can be displaced in the axial direction along a shaft 6, 7 of the respective pulley 1, 2. Furthermore, the transmission includes activation means (not shown in the figure) which are generally electronically controllable and hydraulically acting and which are able to apply an axial force $F_{ax}$ to the said one sheave 4, in such a manner that the drive belt 3 is clamped between the sheaves 4, 5 of the respective pulley 1, 2 and a driving force of a driven shaft 6, i.e. the supplied torque T, is transmitted, with the aid of friction in the conical contact surface between the sheaves 4, 5 and the drive belt 3, from a driving pulley 1 to a driven pulley 2. A transmission ratio of the transmission is determined by the quotient of an effective running radius R2 of the drive belt 3 between the sheaves 4, 5 of the driven pulley 2 and an effective running radius R1 of the drive belt 3 between the sheaves 4, 5 of the driving pulley 1.

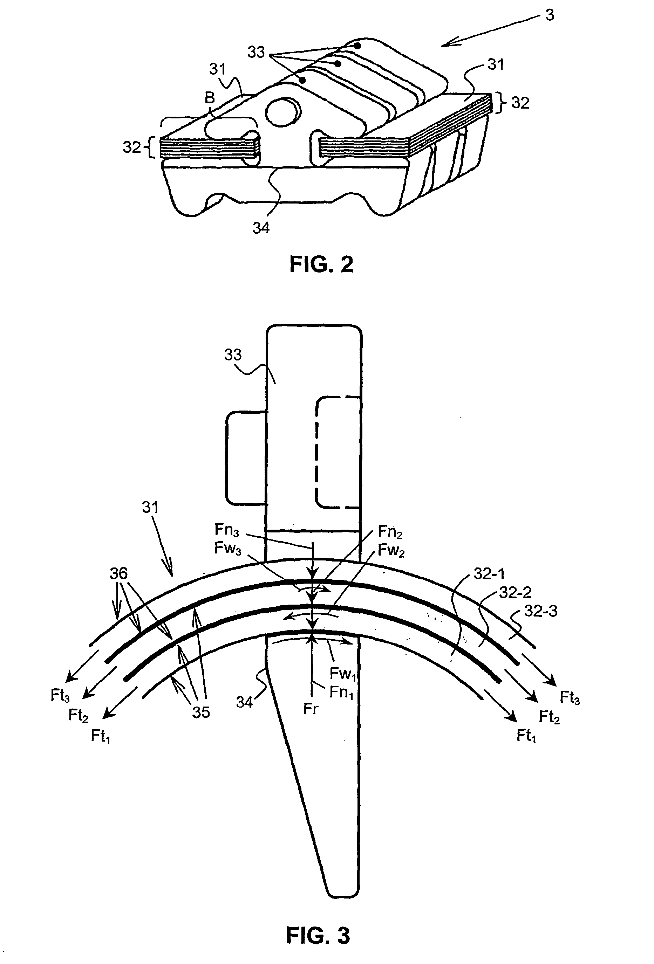

The drive belt 3, of which part is illustrated in more detail in Figure 2, in this example comprises two band sets 31, each comprising an assembly of nested, thin and continuous metal rings or bands 32, which together form a carrier for a series of metal transverse elements 33 and which absorb the clamping force $F_{ax}$ which is respectively exerted between the sheaves 4, 5 of the two pulleys 1, 2. To allow the transverse elements 33 to tilt with respect to one another on the pulley, the transverse elements are provided, in the transverse direction, with what is known as a tilting line 34, beneath which the transverse element tapers. A type of drive belt 3 of this nature is also known as the Van Doorne push belt and is described in more detail, for example, in European patent EP-A-0 626 526. The drive belt 3 functions by virtue of the transverse elements 33 moving towards the driven pulley 32 as a result of a rotation of the driving pulley 1, pushing one another onwards with guidance from the band sets 31. In this way, the driven pulley 2 is set in rotation and the transverse elements 33 are then returned to the driving pulley 32, etc.

On account of the conical shape of the sheaves 4, 5, some of the axial force $F_{ax}$ is exerted as a radially oriented force component Fr on the transverse elements 33. This force component Fr is exerted on the band sets 31 by the transverse elements 33 in the form of normal forces Fn, so that a tensile force Ft for each band 32 is produced therein. All this is diagrammatically illustrated in Figure 3 for a band set 31 which comprises three bands 32-1, 32-2 and 32-3. Figure 3 also illustrates the frictional forces Fw which occur between the transverse elements 33 and the radially inner band 32-1 of a band set 31 and between the respective bands 32 while the drive belt 3 is operating in the transmission. The radial thickness of the bands 32 has been exaggerated in the illustration, for the sake of clarity.

As has already been noted, in the theoretical situation in which it is assumed that the bands 32 precisely adjoin one another in the radial direction, the normal forces Fn acting on the bands 32 on the radially inwardly facing side, i.e. the inner side 35, will decrease uniformly across the band set 31 from the level of the said radial component Fr on the inner side 35 of the radially inner band 32-1 to zero on the radially outwardly facing side, i.e. the outer side 36, of the radially outer band 32-3. The frictional force $Fw_x$ acting on the inner side 35 of the x-th band from a band set 31 which comprises in total z bands 32 is in this context defined by:

$$Fw_X = Fn_X \cdot \mu_X \qquad (1)$$

In the above, x=1 denotes the radially inner band 32-1 from the set 31, and the respective normal force $Fn_x$ is defined by:

$$Fn_X = \frac{z - (x-1)}{z} \cdot Fr \qquad (2)$$

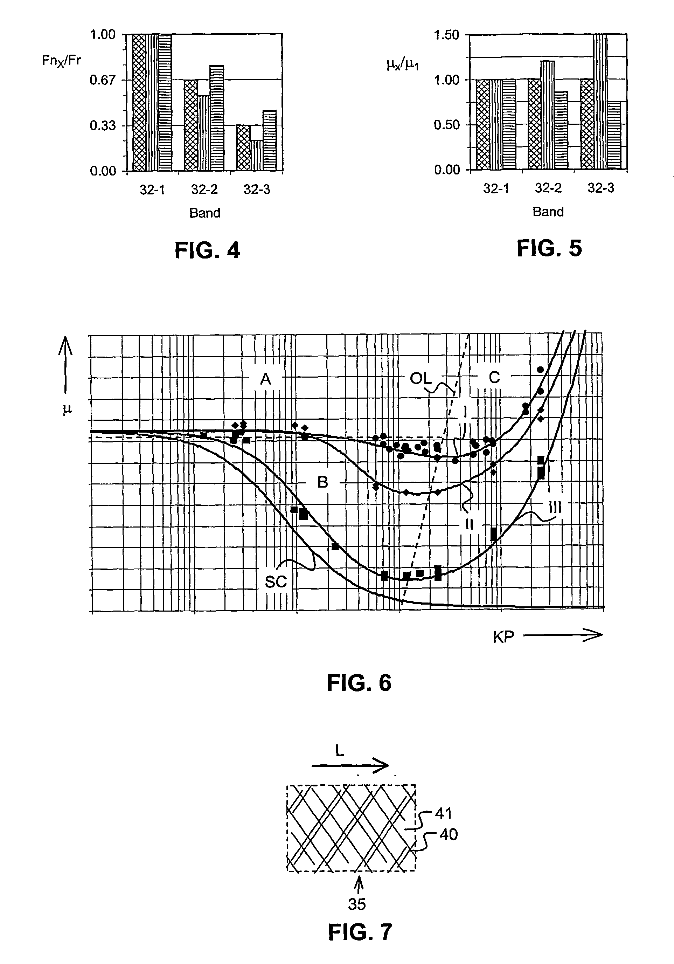

Therefore, with a constant coefficient of friction $\mu_x$, the frictional force $Fw_x$ will exhibit a uniform decrease illustrated by the length of the arrows shown in Figure 3 over the z number of bands 32-x of the band set 31 which corresponds to that of the normal force $Fn_x$. A uniform decrease in the normal forces Fn of this nature is represented once again in the diagram shown in Figure 4, in which the cross-hatched bars denote the respective normal force $Fn_x$ which is in each case acting on the inner side 35 of the successive bands 32-1, 32-2 and 32-3 of the band set 31. The vertically hatched bars represent the same parameter, but in this case for a band set 31 with a certain positive radial play between the pairs of adjacent bands 32 therein, and the horizontally hatched bars denote the parameter for a band set 31 with a certain negative radial play between the bands. Therefore, it can be seen from the diagram presented in Figure 4 that in the case of the positive radial play the frictional force $Fw_x$ which is in each case acting on the inner side 35 of the successive bands 32-1, 32-2 and 32-3 of the band set 31 decreases relatively quickly across the set height z, whereas the situation is reversed in the case of the negative radial play. In practice, there is in fact usually some radial play between the bands 32 from the set 31, and under certain circumstances a certain degree of play is even deliberately sought.

According to the invention, if there is a discernible positive or negative radial play between the adjacent bands 32-1, 32-2 and 32-3 of the band set 31, the uniform decrease in the frictional forces Fw across the set height z, which is generally considered the most ideal distribution, is still obtained or at least approached. For this purpose, the invention proposes adapting the coefficient of friction $\mu$ between two successive bands 32, i.e. a pair of adjacent bands 32, of the band set 31 in a suitable way to a desired decrease in the frictional force $wFw_x$ across the set height z starting from the normal forces $Fn_x$ which actually occur:

$$\frac{\mu_{X+1}}{\mu_X} = \frac{Fn_X \cdot wFw_{X+1}}{wFw_X \cdot Fn_{X+1}} \qquad (3)$$

More particularly, the advantageously uniform decrease in the frictional force $Fw_x$ is obtained by:

$$\frac{\mu_{X+1}}{\mu_X} = \frac{z-x}{z-x+1} \cdot \frac{Fn_X}{Fn_{X+1}} \qquad (4)$$

In this case, the decrease in the normal forces Fn across the set height z which actually occurs is preferably set under the most critical conditions which occur during operation of the drive belt, so that in particular under these conditions the desired optimum decrease in the frictional forces Fw is obtained. Most critical conditions of this type, which are also referred to as a full load situation, generally occur if the mechanical power being transmitted between the pulleys 1, 2 is at a maximum and at the location of the pulley 1 where the effective running radius R1 of the drive belt 3 is smallest. In a passenger car in which the drive belt 3 according to the invention may be used by way of example, most critical operating conditions of this type generally occur at a maximum value of the supplied torque T and a maximum value of a rotational speed of the drive belt 3.

The diagram shown in Figure 5 illustrates the desired coefficient of friction $\mu_{X+1}$, determined with the aid of equation (4), between a pair of adjacent bands 32 in relation to the coefficient of friction $\mu_1$ in the contact between the transverse elements 33 and the radially inner band 32-1 of the band set 31, with the result that, for the band sets 31 represented in Figure 4, a proportional decrease in the frictional force $Fw_x$ across the set height z would be obtained, namely the cross-hatched bar for the band set 31 without radial play between the bands 32 therein, the vertically hatched bar for the band set 31 with the positive radial play and the horizontally hatched bar for the band set 31 with the negative radial play. It can be seen from the diagram shown in Figure 5 that in the case of the band set 31 having the positive radial play between the bands 32, it is advantageous for the coefficients of friction μ between the bands 32 in the set 31 to increase radially outwards, whereas in the case of a negative play this situation is reversed.

According to the invention, it is in practice in fact possible, in a surprisingly simple way, to influence the coefficient of friction μ between the bands 32 in a targeted way. In this context, reference is made to Figure 6, in which a coefficient of friction μ measured in the frictional contact between two adjacent bands 32 is plotted against a characteristic parameter KP, at least for three values of the so-called combined surface roughness Ra' in the said frictional contact, which is defined as:

$$Ra' = \sqrt{Ra_1^2 + Ra_2^2} \qquad (5)$$

In the above, $Ra_1$ is the surface roughness of the outer side 36 of a radially inner band 32-x, and $Ra_2$ is the surface roughness of the inner side 35 of a radially outer band 32-(x+1) in the said frictional contact.

In Figure 6, the combined surface roughnesses Ra' for curve I is approximately equal to 0.9 μm and for curve II approximately equal to 0.4 μm; in both cases, the said surface roughness $Ra_1$, $Ra_2$ of one of the surfaces 35, 36 in the frictional contact is produced by a roughness profile applied thereto. The roughness profile has the function, inter alia, of controlling a flow of a lubricant or coolant which is generally used in the transmission through the frictional contact. In this example, the roughness profile is applied to the inner side 35 of the bands 32 and comprises a multiplicity of overlapping, higher peaks 40 with valley regions 41 between them, the peaks 40 extending in two main directions with respect to the circumferential direction L of the band 32, which main directions are both oriented at an angle of approximately 45 degrees with respect to the said circumferential direction L. Finally, curve III relates to a frictional contact between two virtually smooth bands 32, i.e. with a combined surface roughness Ra' with a value of approximately 0.1 μm, which value can be used as the lower limit for a minimum flow of the said lubricants through the frictional contact. The characteristic parameter KP is in this context defined as follows:

$$KP = f \cdot \frac{\Delta v}{p_{AV}} \qquad (6)$$

In the above, Δv is a differential velocity between the said two bands 32-x and 32-(x+1) in the circumferential direction thereof, $p_{AV}$ is a contact pressure in the frictional contact, i.e. the respective normal force $Fn_x$ divided by the surface area of the contact between the bands 32, and f is a constant factor which is applicable to a given transmission oil, a given temperature and a given surface roughness Ra and roughness profile. According to equation (6), during operation of the drive belt 3 in the transmission, the characteristic parameter KP will vary at least slightly, for example as a function of the transmission ratio of the transmission, with an influence on the absolute value of the differential velocity Δv in the frictional contact, and also as a function of the radial component Fr of the axial forces Fax exerted on the drive belt 3 by the pulleys, and obviously also the profile of the normal forces Fn across the set height, both with an influence on the contact pressure $p_{AV}$ which is active in the frictional contact and is also influenced by the axial dimension of the bands 32.

The shape of the curves I, II and III from Figure 6 differs from what would normally be expected in a lubricated frictional contact. The curve SC which normally occurs is also illustrated in Figure 6 and is known, for example, from European patent application EP-A-1 221 562. The unexpectedly deviating shape, and in particular the considerable increase, of the respective curves I, II and III compared to the expected curve SC in the extreme right-hand side part thereof is caused, as far as the applicant is aware, by the particular feature that the frictional contact between the bands 32 is continuous in the circumferential direction and also the respective direction of movement, so that a lubricant can only flow into the said contact from the sides of the bands 32, which limits the layer or film thickness of the lubricant which is present between the bands 32 of the set 31 during normal operation. The hypothesis is therefore that the said film thickness increases less quickly with the differential velocity Δv than a strictly proportional increase, which is represented by curve SC and is described in the general specialist literature. The coefficient of friction μ will then in fact increase relatively quickly as the differential velocity Δv increases, for example on account of the fact that turbulent flow in the lubricant, which is produced in the vicinity of the surfaces 35, 36 of the frictional contact, on account of the relatively small film thickness has a considerable influence on the overall frictional behaviour. Moreover, it has been observed that the shaping of the aforesaid profile has a relatively great influence on the friction, which is probably caused by its influence on the abovementioned turbulent flow and film thickness.

In the case of a defined constant factor C, it follows from Figure 6 that the coefficient of friction μ is influenced by the normal force Fn in the frictional contact via the contact pressure $p_{AV}$, by the differential velocity Δv in the frictional contact and by the reduced surface roughness Ra' in the frictional contact. Figure 6 broadly illustrates three regions which the curves I, II and III pass through as a function of the normal force Fn, namely a region 'A', in which the coefficient of friction $\mu$ is virtually constant irrespective of the normal force Fn, this frictional behaviour being known in the literature as boundary lubrication, a region 'B', in which the coefficient of friction decreases as the normal force Fn decreases, this frictional behaviour being known in the literature as mixed lubrication, and a region 'C', in which the coefficient of friction increases as the normal force Fn decreases. As has been stated, the latter behaviour has not previously been described in the literature, but in terms of lubrication conditions approximately corresponds to the full-film lubrication conditions which are known from the literature and in which the surfaces of a frictional contact 35, 36 are completely separated from one another by a layer of lubricant. In Figure 6, the dashed lines at least approximately indicate the boundaries between the regions A, B and C. It is these variations in the coefficient of friction $\mu$ as a function of the said parameters which the present invention exploits in an inventive way.

According to the invention, first of all the change in the normal force Fn in at least two successive frictional contacts between at least three successive bands 32 of the band set 31 is determined. It may be determined qualitatively - for example on the basis of the radial play which is present between the bands 32 - or even quantitatively - for example on the basis of the measurement method described below. Then, a desired profile of the coefficient of friction $\mu$ in the said at least two frictional contacts is determined with the aid of equation (2) or (3), which can once again be defined in qualitative or quantitative terms. If, by way of example, a qualitative approach is selected, it may be sufficient to determine whether the radial play is positive or negative, i.e. whether the normal forces decrease to a greater or lesser extent than proportionally across the set height z, and as a function of this determination to select the said parameters in such a manner that the coefficient of friction $\mu$ respectively increases or decreases, for example on the basis of the measurement data from Figure 6.

Of course, it is particularly advantageous to employ the proposed method across the entire set height z, i.e. for all the frictional contacts or pairs of adjacent bands 32.

A starting point for an example of a possible use of the present invention is a band set 31 in which the normal force Fn decreases more than proportionally across the set height z on account of a positive radial play between the bands 32 therein, which band set 32 has been illustrated by the vertically hatched columns from the diagram in Figure 4. In such a situation, according to the invention, the characteristic parameter KP which occurs in the full load situation during operation should preferably be selected in the region C in Figure 6, in such a manner that the relative change in the coefficient of friction $\mu_x$ across the set height z which is desired according to the invention, in the present case an increase, is realized automatically during operation via the influence of the normal force Fn on the characteristic parameter KP. This is because in region C the coefficient of friction $\mu$ between the bands 32 increases as the normal force Fn decreases, i.e. with a decrease in the contact pressure $p_{AV}$ between the bands 32. In this context, in particular the surface roughness Ra of the bands 32 and the shape of the profile applied thereto are suitable parameters for guiding the absolute level of the coefficients of friction $\mu$ which occur in the band set 31 during operation towards a desired range of possible values therefor, as can be seen from a comparison of the curves I, II and III with one another. Moreover, these parameters also determine the extent to which the coefficient of friction $\mu$ changes, i.e. the slope of the respective curve I, II or III, so that this can be matched to the said defined change in the normal force Fn. One significant advantage of the use of the invention discussed above is that all bands 32 of the band set 31 can be provided with a corresponding surface roughness Ra and a surface profile and can therefore be produced using the same manufacturing process.

Set against the same background, for a band set 31 with a negative radial play between the bands 32 thereof, it is the case that the characteristic parameter KP which occurs in the full load situation during operation should preferably be selected in the region B in Figure 6, in such a manner that the relative decrease in the coefficient of friction $\mu$ which is desired in such a case is realized via the influence of the normal force Fn on the characteristic parameter KP.

It should be noted that, from the aspect of frictional losses, it is advantageous for the absolute coefficient of friction $\mu$ to be low, i.e. between 0.4 and 0.1 micrometers, this lower limit being required in order to obtain the minimum required flow of the said lubricant through the frictional contact. In this respect, it is furthermore advantageous for the characteristic parameter KP which occurs in the full load situation during operation to be selected to be in or close to a minimum for the coefficient of friction $\mu$ indicated by the respective curve I, II or III from Figure 6, i.e. in the vicinity of the transition between the regions B and C, i.e. in the transition region between mixed lubrication conditions and full-film lubrication conditions.

The band set 31 having a positive radial play between the bands 32 thereof may, moreover, be optimized still further by selecting the characteristic parameter KP which occurs in the full load situation during operation to be slightly greater than the value for this parameter associated with the minimum for the coefficient of friction $\mu$, specifically in such a manner that the said minimum in fact occurs in a part-load situation. In this context, the present invention is based on the observation that the influence of the differential velocity $\Delta v$ is crucial in the ratio between the differential velocity $\Delta v$ and the contact pressure $p_{Av}$, which together influence the characteristic parameter KP. Thus, since during normal operation, these parameters decrease in the transmission from the full load situation towards the said part-load situation and because the influence of the differential velocity $\Delta v$ is crucial therein, the value of the characteristic parameter KP in part-load is lower than in full load. In this case, the invention combines low frictional losses under part-load on the drive belt 3, as a result of the minimum of the coefficient of friction $\mu$ which then occurs in a relatively flat part of the respective curve I, II or III, with a robust drive belt design under full load, since with the then slightly greater value of the characteristic parameter KP, the respective curve I, II or III has a rising trend and the coefficient of friction $\mu$ increases with a decrease in normal force $Fn_x$ between the bands 32, as is desired according to the invention for a band set 31 with a positive radial play between the bands 32 thereof.

The actual value of the normal forces Fn occurring which is required for a quantitative and more accurate application of the present invention can be theoretically approximated, such as by a model calculation on the basis of the distribution of the radial play between the respective pairs of adjacent bands 32 of the band set 31 and the radial force Fr exerted on the respective band set at the location of a respective pulley 1, 2 on the band set 31, but these normal forces may also be measured, for example in the transmission itself or with the aid of a measurement method in which the band set 31 is clamped on a test stand between two cylindrical rolls driven in rotation by pushing these rolls away from one another with a defined clamping force. It is preferable for the dimension or radius of the rolls in this case to correspond to the effective running radii R1 and R2 of the drive belt 3 in the transmission in the said full load situation, which preferably also applies to the speed at which a first roll is rotated. As a result of the difference in effective running radius between the inner band 32-1, which is in contact with the rolls, and the other bands 32 of the band set 31, a difference in peripheral velocity $\Delta v$ is produced between the respective bands 32, in the same way as automatically occurs during operation in the transmission. If appropriate, the respective second roll, generally the roll having the smaller radius, can be driven in such a manner that the difference in peripheral velocity between this roll and that of the inner side 35 of the radially inner band 32-1 of the band set 31 is produced so as to correspond to the velocity difference which occurs between the latter inner side 35 and the transverse elements 33 during the full load situation in the drive belt 3. The clamping force is preferably also selected in such a manner that, at least at the location of the second roll, the latter inner side 35 is subject to a normal force Fn1 which corresponds to the said radial force as occurs during the full load situation in the drive belt 3.

Moreover, use of the characteristic parameter KP according to the invention offers the practical benefit that the above-described measurement method can be carried out at a lower level of the radial force Fr, i.e. the normal force Fn1 on the radially inner band 32-1 of the band set 31, and of the differential velocity $\Delta v$ between the respective bands than the levels which occur in the full load situation, provided that the associated value for the characteristic parameter KP corresponds to its value in the said full load situation. Starting from the full load situation results in a maximum improvement to the service life or load-bearing capacity of the drive belt 3.

Then, the normal forces Fn which actually occur at the location of a roll can be accurately determined by measuring an elongation $\varepsilon$ of the separate bands 32, for example with the aid of a strain gauge measurement, and converting it via:

$$Fn_X = \varepsilon \cdot E \cdot S \cdot \alpha \tag{7}$$

In the above, E is the Young's modulus of elasticity of the material from which the corresponding band 32 is made, S is the surface area of a cross section of the corresponding band 32 oriented perpendicular to the circumferential direction, and $\alpha$ is the angle at which the band set 31 is in contact with the roll at the location where the elongation $\varepsilon$ is measured.

Since with existing techniques, such as a strain gauge measurement, it is difficult or even impossible to measure the said elongation $\varepsilon$ of the bands 32 apart from the radially outer band 32-3, the present invention also proposes the simpler method described below, in which:

- the normal force $Fn_B$ on the outer band 32 of the band set 31 is determined using the measurement method described above;
- the said outer band 32 of the band set 31 is removed, so that the band 32 which was previously the outer band but one in the band set 31 then becomes the band 32 which is located furthest outwards in the radial sense, i.e., the outer band 32, of the remaining set of cords;
- the said clamping force, which leads to the radial force Fr which applies to the complete band set 31, is reduced by the factor $(Fr-Fn_B)/Fr$; and wherein
- the above three steps are repeated for the outer band 32 of the band set still remaining in each instance until the set comprises just one band 32, namely the inner band 32-1 of the original, complete band set 31.

On the other hand, the abovementioned measurement method and also the simple method referred to above are also suitable for determining the coefficient of friction $\mu$ which is actually acting on the inner side 35 of a band 32. In this case, the starting point is the theory that the amplitude of the tensile force Ft across the circumference of a band 32, i.e. the maximum tensile force $Ft_{MAX}$ occurring minus the minimum tensile force $Ft_{MIN}$ occurring satisfies the following equation:

$$\left(Ft_{MAX} Ft_{MIN}\right) = e^{\mu\alpha} \tag{8}$$

In the above, $\alpha$ is the angle at which the band set 31 is in contact with the smaller of the two rolls. Since the tensile force Ft is determined by the product of the Young's modulus of elasticity E of the band 32, the surface area S of a cross section oriented perpendicular to the circumferential direction of the band 32 and the measured elongation $\varepsilon$ of the band, equation (8) can be written as:

$$\mu \simeq \frac{\ln\left[(\varepsilon_{MAX} - \varepsilon_{MIN}) \cdot E \cdot S\right]}{\alpha} \tag{9}$$

In the above, $\varepsilon_{MAX}$ and $\varepsilon_{MIN}$ respectively denote the maximum and minimum value for the elongation $\varepsilon$ measured across the circumference of the band 32, which, with the aid of the abovementioned measurement method and useful method described above, can be measured successively for all the bands 32 of the band set 31.

Figure 7 diagrammatically depicts the roughness profile with which the measurement results incorporated in Figure 6 were obtained. Figure 7 shows a small piece of an inner side 35 of a band 32 with elevated peaks 40 arranged thereon, between which are located the valley regions 41, as well as the circumferential direction L of the drive belt 3 and its bands 32. A roughness profile of this nature, which is particularly suitable for realizing the desired profile of the coefficients of friction $\mu$ in accordance with the present invention, is characterized by the fact that at least a considerable proportion of the peaks 40 extend in two main directions with respect to the circumferential direction L of the band 32, which main directions are both oriented at an angle in the range from 10 to 80 degrees with respect to the circumferential direction L of the band 32, preferably at an angle in the range from 50 to 80 degrees, by virtue of these peaks 40 being between 3 and 15 micrometers higher than the valley regions 41 and by virtue of a transverse dimension of these peaks 40 amounting to less than one seventh, preferably less than one tenth, of a dimension of the valley regions 41 in the said direction.

As has already been noted, the frictional behaviour described by curves I, II and III from Figure 6 deviates from the behaviour which normally occurs in a lubricated frictional contact and is illustrated by curve SC. In particular, it has been discovered that for a relatively high value of the characteristic parameter KP, where the full-film lubrication conditions apply to the frictional contact, the coefficient of friction $\mu$ does not adopt a virtually constant and low value, but rather, by contrast, increases considerably with an increasing value of the characteristic parameter KP. The result of all this is that a minimum unexpectedly occurs in the coefficient of friction $\mu$ in the frictional contact between the bands 31 as a function of the characteristic parameter. Therefore, whereas previously an optimum design of a transmission has aimed for the maximum possible value for the characteristic parameter KP, according to the invention a minimum has proven to occur, the position of this minimum, moreover, varying with the reduced roughness Ra'.

On the basis of this newly obtained insight, the invention, with a view to minimizing friction losses, proposes using the drive belt 3 in or in the vicinity of a minimum for the coefficient of friction $\mu$ indicated by the respective curve I, II or III from Figure 6, i.e. at the location of the transition between the regions A or B and C, which is diagrammatically indicated by the line OL. With regard to friction losses, it is in this context advantageous for the absolute coefficient of friction $\mu$ also to be selected to be low, for which purpose, according to the invention, the reduced roughness Ra' should be selected to be in the range between 0.4 and 0.1 micrometer. The lower limit of 0.1 $\mu$m is required in order to obtain a sufficient flow of the said lubricant through the frictional contact.

Since the characteristic parameter KP is defined not only by the geometry of the drive belt 3 and the band set 31, but rather, for example via the constant factor f and the magnitude of the axial force Fax, also by operating parameters of the transmission in which it is used, its value will normally be more or less fixed. In such a case, a suitable selection of the reduced roughness Ra' also offers the option of allowing the minimum for the coefficient of friction $\mu$ to coincide with the relevant value for the characteristic parameter KP.

**Claims**

1. Drive belt (3), in particular for use in a continuously variable transmission, such as for passenger cars, with two pulleys around which the drive belt (3) is positioned, which drive belt (3) comprises a continuous band set (31) on which a large number of transverse elements (33) are arranged, which elements can move along the band set (31) at least in the circumferential direction (L), the band set (31) comprising at least a number (z) of bands (32) which are nested together in the radial direction and are relatively thin, with a difference in circumferential length existing between at least two adjacent bands (32; x, x+1) of the band set (31) between the outer side (36) of the radially enclosed, i.e. inner band (32; x) and the inner side (35) of the radially enclosing, i.e. outer band (32; x+1), **characterized in that**, at least if the said difference in circumferential length has a positive value, a coefficient of friction ($\mu_{x+1}$) which is active in a frictional contact between the two adjacent bands (32; x, x+1) while the drive belt (3) is operating is greater than a coefficient of friction ($\mu_x$) which is active in a frictional contact on the inner side (35) of the radially inner band (32; x) of the said two adjacent bands (32; x, x+1) and **in that**, at least if the said difference in circumferential length has a negative value, the first abovementioned coefficient of friction ($\mu_{x+1}$) is lower than the coefficient of friction ($\mu_x$) which is active in the frictional contact on the inner side (35) of the radially inner band (32; x) of the said two adjacent bands (32; x, x+1).

2. Drive belt according to Claim 1, **characterized in that**, at least if the said difference in circumferential length has a positive value, what are known as full-film lubrication conditions are present between the said two adjacent bands (32; x, x+1), and **in that**, at least if the said difference in circumferential length has a negative value, what are known as boundary lubrication conditions are present between the said two adjacent bands (32; x, x+1).

3. Drive belt according to Claim 1 or 2, **characterized in that** the said coefficients of friction ($\mu_{x+1}$, $\mu_x$) satisfy the following equation:

$$\frac{\mu_{X+1}}{\mu_X} = \frac{z-x}{z-x+1} \cdot \frac{Fn_X}{Fn_{X+1}}$$

where:

- x and x+1 respectively denote the radially inner one and the radially outer one of the two adjacent bands (32; x, x+1);
- z denotes the total number of bands (32) of the band set (31);
- Fn is the maximum normal force acting on the inner side (35) of the respective band (32; x, x+1); and where
- $\mu$ is the coefficient of friction which is active in the frictional contact on the inner side (35) of the respective band (32; x, x+1 ).

4. Drive belt (3) according to Claim 1, 2 or 3, **characterized in that** at least one of the two adjacent bands (32; x, x+1) is provided with a surface profile formed by elevated peaks (40) with lower valley regions (41) between them.

5. Drive belt according to Claim 4, **characterized in that** at least some of the peaks (40) are between 3 and 15 micrometers higher than the valley regions (41), **in that** a transverse dimension of these peaks (40) amounts to less than one seventh, preferably less than one tenth of a dimension of the valley regions (41) in this direction, and **in that** these peaks (40) are oriented at an angle in the range from 10 to 80° with respect to a circumferential direction (L) of the band (32), preferably at an angle in the range from 50 to 80°.

6. Drive belt according to Claim 4 or 5, **characterized in that** the peaks (40) extend at least in two main directions oriented at an angle to one another, which main directions are oriented at virtually the same angle with respect to a circumferential direction (L) of the band (32).

7. Drive belt (3) according to one of the preceding claims, **characterized in that** the said difference in circumferential length has a positive value, and **in that** the two adjacent bands (32) have a combined surface roughness (Ra') of between approximately 0.4 and 0.1 micrometer, wherein in a part-load situation of the drive belt (3) at least the coefficient of friction ($\mu_x$) which is active on the inner side (35) of the radially inner band (32; x) of the said two adjacent bands (32; x, x+1) in a frictional contact is at a minimum.

**Patentansprüche**

1. Treibriemen (3), insbesondere zur Verwendung in einem stufenlosen Getriebe, wie zum Beispiel für Personenkraftwagen, mit zwei Riemenscheiben, um die herum der Treibriemen (3) positioniert ist, wobei der Treibriemen (3) einen Endlosbandsatz (31) umfasst, an dem eine große Anzahl von Querelementen (33) angeordnet ist, wobei sich diese Elemente zumindest in Umfangsrichtung (L) entlang dem Bandsatz (31) bewegen können, wobei der Bandsatz (31) mindestens eine Anzahl (z) von Bändern (32) umfasst, die in Radialrichtung ineinander verschachtelt sind und relativ dünn sind, wobei zwischen mindestens zwei benachbarten Bändern (32; x, x+1) des Bandsatzes (31) zwischen der Außenseite (36) des radial eingeschlossenen, das heißt inneren Bands (32; x) und der Innenseite (35) des radial einschließenden, das heißt äußeren Bands (32; x+1) eine unterschiedliche Umfangslänge besteht, **dadurch gekennzeichnet, dass**, zumindest wenn die unterschiedliche Umfangslänge einen positiven Wert aufweist, ein Reibungskoeffizient ($\mu_{x+1}$), der bei einem Reibkontakt zwischen den beiden benachbarten Bändern (32; x, x+1) wirkt, während der Treibriemen (3) betrieben wird, größer ist als ein Reibungskoeffizient ($\mu_x$), der bei einem Reibkontakt auf der Innenseite (35) des radial inneren Bands (32; x) der beiden benachbarten Bänder (32; x, x+1) wirkt, und dass, zumindest wenn die unterschiedliche Umfangslänge einen negativen Wert hat, der oben genannte erste Reibungskoeffizient ($\mu_{x+1}$) niedriger ist als der Reibungskoeffizient ($\mu_x$), der bei dem Reibkontakt auf der Innenseite (35) des radial inneren Bands (32; x) der beiden benachbarten Bänder (32; x, x+1) wirkt.

2. Treibriemen nach Anspruch 1, **dadurch gekennzeichnet, dass**, zumindest wenn die unterschiedliche Umfangslänge einen positiven Wert hat, zwischen den beiden benachbarten Bändern (32; x, x+1) so genannte Vollfilmschmierungsbedingungen herrschen, und dass, zumindest wenn die unterschiedliche Umfangslänge einen negativen Wert hat, zwischen den beiden benachbarten Bändern (32; x, x+1) so genannte Grenzschmierungsbedingungen herrschen.

3. Treibriemen nach Anspruch 1 oder 2, **dadurch gekennzeichnet, dass** die Reibungskoeffizienten ($\mu_{x+1}$, $\mu_x$) die folgende Gleichung erfüllen:

$$\frac{\mu_{x+1}}{\mu_x} = \frac{z-x}{z-x+1} \cdot \frac{Fn_x}{Fn_{x+1}}$$

wobei:

- x und x+1 das radial innere bzw. das radial äußere der beiden benachbarten Bänder (32; x, x+1) bezeichnen;
- z die Gesamtanzahl von Bändern (32) des Bandsatzes (31) bezeichnet;
- Fn die maximale Normalkraft ist, die auf die Innenseite (35) des jeweiligen Bands (32; x, x+1) wirkt; und wobei
- $\mu$ der bei dem Reibkontakt an der Innenseite (35) des jeweiligen Bands (32; x, x+1) wirkende Reibungskoeffizient ist.

4. Treibriemen (3) nach Anspruch 1, 2 oder 3, **dadurch gekennzeichnet, dass** das mindestens eine der beiden benachbarten Bänder (32; x, x+1) mit einem Flächenprofil versehen ist, das durch erhabene Spitzen (40) mit tieferen Talbereichen (41) dazwischen gebildet wird.

5. Treibriemen nach Anspruch 4, **dadurch gekennzeichnet, dass** zumindest einige der Spitzen (40) zwischen 3 und 15 Mikrometer höher sind als die Talbereiche (41), dass sich eine Querabmessung dieser Spitzen (40) auf weniger als ein Siebtel, vorzugsweise weniger als ein Zehntel einer Abmessung der Talbereiche (41) in dieser Richtung beläuft, und dass diese Spitzen (40) in einem Winkel in einem Bereich von 10 bis 80° bezüglich einer Umfangsrichtung (L) des Bands (32), vorzugsweise in einem Winkel in einem Bereich von 50 bis 80°, ausgerichtet sind.

6. Treibriemen nach Anspruch 4 oder 5, **dadurch gekennzeichnet, dass** sich die Spitzen (40) mindestens in zwei Hauptrichtungen erstrecken, die in einem Winkel zueinander ausgerichtet sind, wobei die Hauptrichtungen in praktisch dem gleichen Winkel bezüglich einer Umfangsrichtung (L) des Bands (32) ausgerichtet sind.

7. Treibriemen (3) nach einem der vorhergehenden Ansprüche, **dadurch gekennzeichnet, dass** die unterschiedliche Umfangslänge einen positiven Wert aufweist und dass die beiden benachbarten Bänder (32) eine kombinierte Oberflächenrauigkeit (Ra') von zwischen ca. 0,4 und 0,1 Mikrometer aufweisen, wobei in einer Teillastsituation des Treibriemens (3) mindestens der Reibungskoeffizient ($\mu_x$), der auf der Innenseite (35) des radial inneren Bands (32; x) der beiden benachbarten Bänder (32; x, x+1) wirkt, bei einem Reibkontakt minimal ist.

**Revendications**

1. Courroie (3) d'entraînement, en particulier destinée à être utilisée dans une transmission à variation continue, comme pour des voitures de tourisme, comprenant deux poulies autour desquelles est positionnée la courroie (3) d'entraînement, ladite courroie (3) d'entraînement comportant un ensemble (31) continu de bandes sur lequel est disposé un grand nombre d'éléments transversaux (33), lesdits éléments pouvant se déplacer le long de l'ensemble (31) de bandes au moins dans la direction circonférentielle (L), l'ensemble (31) de bandes comportant au moins un nombre (z) de bandes (32) imbriquées ensemble dans la direction radiale et relativement minces, une différence de longueur circonférentielle existant entre au moins deux bandes (32 ; x, x+1) adjacentes de l'ensemble (31) de bandes entre le côté extérieur (36) de la bande (32 ; x) radialement enveloppée, c'est-à-dire intérieure, et le côté intérieur (35) de la bande (32 ; x+1) radialement enveloppante, c'est-à-dire extérieure, **caractérisée en ce que**, au moins si ladite différence de longueur circonférentielle a une valeur positive, un coefficient ($u_{x+1}$) de frottement intervenant dans un contact avec frottement entre les deux bandes (32 ; x, x+1) adjacentes pendant que la courroie (3) d'entraînement est en fonctionnement est supérieur à un coefficient ($\mu_x$) de frottement intervenant dans un contact avec frottement sur le côté intérieur (35) de la bande radialement intérieure (32 ; x) parmi lesdites deux bandes (32 ; x, x+1) adjacentes et **en ce que**, au moins si ladite différence de longueur circonférentielle a une valeur négative, le premier coefficient ($\mu_{x+1}$) de frottement susmentionné est inférieur au coefficient ($\mu_x$) de frottement intervenant dans un contact avec frottement sur le côté intérieur (35) de la bande radialement intérieure (32 ; x) parmi lesdites deux bandes (32 ; x, x+1) adjacentes.

2. Courroie d'entraînement selon la revendication 1, **caractérisée en ce que**, au moins si ladite différence de longueur circonférentielle a une valeur positive, il existe des conditions dites de lubrification par film complet entre lesdites deux bandes (32 ; x, x+1) adjacentes, et **en ce que**, au moins si ladite différence de longueur circonférentielle a une valeur négative, il existe des conditions dites de lubrification limite entre lesdites deux bandes (32 ; x, x+1) adjacentes.

3. Courroie d'entraînement selon la revendication 1 ou 2, **caractérisée en ce que** lesdits coefficients ($\mu_{x+1}$, $\mu_x$) de frottement vérifient l'équation suivante :

$$\frac{\mu_{x+1}}{\mu_x} = \frac{z-x}{z-x+1} \cdot \frac{Fn_x}{Fn_{x+1}}$$

où :

x et x+1 dénotent respectivement la bande radialement intérieure et la bande radialement extérieure parmi les deux bandes (32 ; x, x+1) adjacentes ;
z dénote le nombre total de bandes (32) de l'ensemble (31) de bandes ;
Fn est l'effort normal maximal agissant sur le côté intérieur (35) de la bande (32 ; x, x+1) considérée ; et où
$\mu$ est le coefficient de frottement intervenant dans le contact avec frottement sur le côté intérieur (35) de la bande (32 ; x, x+1) considérée.

4. Courroie (3) d'entraînement selon la revendication 1, 2 ou 3, **caractérisée en ce qu'**au moins une des deux bandes (32 ; x, x+1) adjacentes est dotée d'un profil de surface formé par des pics surélevés (40) entre lesquels se trouvent des régions (41) de creux plus basses.

5. Courroie d'entraînement selon la revendication 4, **caractérisée en ce qu'**au moins certains des pics (40) se situent entre 3 et 15 micromètres au-dessus des régions (41) de creux, **en ce qu'**une dimension transversale desdits pics (40) équivaut à moins d'un septième, de préférence moins d'un dixième d'une dimension des régions (41) de creux dans cette direction, et **en ce que** lesdits pics (40) sont orientés suivant un angle compris dans l'intervalle de 10 à 80° par rapport à une direction circonférentielle (L) de la bande (32), de préférence suivant un angle compris dans l'intervalle de 50 à 80°.

**6.** Courroie d'entraînement selon la revendication 4 ou 5, **caractérisée en ce que** les pics (40) s'étendent au moins dans deux directions principales orientées de façon à former un angle l'une avec l'autre, lesdites directions principales étant orientées virtuellement suivant le même angle par rapport à une direction circonférentielle (L) de la bande (32).

**7.** Courroie (3) d'entraînement selon l'une des revendications précédentes, **caractérisée en ce que** ladite différence de longueur circonférentielle a une valeur positive et **en ce que** les deux bandes (32) adjacentes présentent une rugosité de surface combinée (Ra') comprise entre approximativement 0,4 et 0,1 micromètre, au moins le coefficient ($\mu_x$) de frottement intervenant sur le côté intérieur (35) de la bande radialement intérieure (32 ; x) parmi lesdites deux bandes (32 ; x, x+1) adjacentes dans un contact avec frottement se situant à un minimum dans une situation de charge partielle de la courroie (3) d'entraînement.

FIG. 1

**FIG. 2**

**FIG. 3**

14

FIG. 4

FIG. 5

FIG. 6

FIG. 7

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 0909907 A
- US 4579549 A
- EP 0626526 A
- EP 1221562 A